# EUROPEAN PATENT APPLICATION

(11) **EP 1 962 177 A1**
(43) Date of publication of application: **27.08.2008**
(21) Application number: 07123362.1
(22) Date of filing: 17.12.2007
(51) Int. Cl.: G06F 3/048, G06F 3/033

(54) **Electronic device to input user command**

(30) Priority: 26.02.2007 KR 20070018995
(71) Applicant: Samsung Electronics Co., Ltd., Suwon-si, Gyeonggi-do (KR)
(72) Inventor: Won, Joon-ho, Gyeonggi-do (KR); Choi, Young-gyoo, Gyeonggi-do (KR)
(74) Representative: Grünecker, Kinkeldey, Stockmair & Schwanhäusser Anwaltssozietät

(57) **Abstract**

In an electronic device, the physical boundaries of a manipulation unit for inputting a user command defines a contour to which an arrangement of items that are displayed on a display unit conforms. A user's active manipulation of the manipulation unit corresponds to a reaction of a GUI on the display unit. Accordingly, the user can manipulate the electronic device more easily and conveniently.

## Description

### BACKGROUND OF THE INVENTION

### 1. Field of the Invention

The present general inventive concept relates to an electronic device. More particularly, the present general inventive concept relates to an electronic device to input a user command.

### 2. Description of the Related Art

A user interface (UI) is a common name of a mechanism that allows interaction between an electronic device and a user. That is, the UI is a mechanism through which a user can transfer a user command to the electronic device. Representative examples of the UI include a physical user interface (PUI) and a graphical user interface (GUI).

The PUI is a mechanism for inputting a user command through a physical method such as a keyboard, a manipulation button, a touchpad, and so forth, and the GUI is a mechanism for inputting a user command through a selection of an icon or menu that is displayed on a display.

Even when a user command is input using the GUI, the PUI is necessary. This is because a user must input a movement command and a selection command only through the PUI, whereby the user moves a cursor or a pointer in the GUI to a menu, a list, and icons, which are displayed on a display, and selects an item where the pointer is positioned.

Although development of a GUI and a PUI is in progress to provide convenience in manipulating an electronic device with an excellent visual effect to a user, a large number of manipulation buttons are provided in a manipulation unit for receiving an input of a manipulation command, and this causes the user inconvenience. Also, the user must remember functions of all manipulation buttons of respective modes to use the device efficiently.

In addition, since the PUI is different in shape from the GUI, a user's manipulation on the PUI may not correspond to activity displayed on a GUI display of the electronic device.

### SUMMARY OF THE INVENTION

The present general inventive concept provides an electronic device that enables a user to input a user command more easily.

The present general inventive concept provides an electronic device that enables a user to manipulate the electronic device more easily by uniting a user command input method and a GUI display method.

Additional aspects and utilities of the present general inventive concept will be set forth in part in the description which follows and, in part, will be obvious from the description, or may be learned by practice of the present general inventive concept.

The foregoing and/or other aspects and utilities of the present general inventive concept may be achieved by providing an electronic device, which includes a manipulation unit having a touch region of a specified form and receiving a user command of one of at least a touch, a slide, and a press on the touch region, a display unit to display a graphical user interface (GUI), and a control unit to generate the GUI that corresponds to the input user command and control the display unit to display the generated GUI responsive to the user command being input to the manipulation unit, the control unit generates the GUI in an arrangement of items conforming to the specified form of the touch region.

The manipulation unit may include a touch sensor unit to sense the touch, and a press sensor unit to sense the press, and the press sensor unit may be positioned below the touch sensor unit.

The control unit may generate the GUI that includes a list of the items responsive to the user command being input to the manipulation unit.

The list may be a list in which a specified item is highlighted.

The control unit may control the display of the list by changing the highlighted item if it is determined that a touch point is shifted in the touch region to input the slide user command.

A speed at which the highlighted item is changed may be in proportion to a speed at which the touch point is shifted in the touch region.

The highlighted item may be displayed on the center of the displayed list.

A direction in which the touch point in the touch region is shifted may be opposite to a direction in which the items constituting the list shift in the display.

The control unit may control the display of the list by changing the highlighted item if it is determined that a specified time elapses without any movement of a specified touch point in the touch region.

The specified form may be one of a part of a piecewise linear curve and a smooth curve.

The items may be at least one of an icon, text data, and a symbol.

The foregoing and/or other aspects and utilities of the present general inventive concept may be achieved by providing an electronic device, which includes a manipulation unit having a touch region and to receive an input of a user command of one of at least a touch, a slide, and a press on the touch region, and a control unit to generate a graphical user interface (GUI) responsive to the input user command and to control a display of the generated GUI if the user command is input to the manipulation unit, and where a contour of the touch region is one of a piecewise linear curve and a segment of an elliptical ring.

The manipulation unit may include a touch sensor unit to sense the touch, and a press sensor unit to sense the press, and the press sensor unit may be positioned below the touch sensor unit.

The control unit may generate the GUI that includes a list of the items responsive to the user command being input to the manipulation unit.

The list may be a list in which a specified item among the items is highlighted.

The control unit may control the display of the list by changing the highlighted item if it is determined that a touch point is shifted in the touch region to input the slide user command.

The foregoing and/or other aspects and utilities of the present general inventive concept may be achieved by providing a method of controlling an electronic device, which includes receiving an input of a user command through a touch, a slide, and a press on a touch region of a specified form, generating a graphical user interface (GUI) that corresponds to the input user command responsive to the user command being received, and displaying the generated GUI, wherein generating the GUI includes arranging items in the GUI to conform to the specified form of the touch region.

The receiving of the input of the user commands may include sensing the touch, and sensing the press.

The generating of the GUI may include generating the GUI that includes a list of the items.

The list may be a list in which a specified item is highlighted.

The generating of the GUI may include generating the list by changing the highlighted item if it is determined that a touch point is shifted in the touch region.

A speed at which the highlighted item changes may be in proportion to a speed at which the touch point is shifted.

The highlighted item may be displayed on the center of the displayed list.

A direction in which the touch point is shifted in the touch region may be opposite to a direction in which the items constituting the list move in the display.

The generating of the GUI may include generating the list by changing the highlighted item if it is determined that a specified time elapses without any movement of the specified touch point in the touch region.

The specified form may be one of a piecewise linear curve and a smooth curve.

The items may be at least one of an icon, text data, and a symbol.

The foregoing and/or other aspects and utilities of the present general inventive concept may be achieved by providing a method of controlling an electronic device, which includes receiving an input of a user command through a touch, a slide, and a press on a touch region of a form that is one of a piecewise linear curve and a smooth curve, and generating a graphical user interface (GUI) that corresponds to the input user command responsive to the user command being input.

The receiving of the input of the user command may include sensing the touch, and sensing the press.

The foregoing and/or other aspects and utilities of the present general inventive concept are also achieved by providing a user interface system to an electronic device including a user control having a predetermined contour and actuated by a plurality of distinct user actuations thereon, a display having indicia displayed thereon aligned in an arrangement conforming with the predetermined contour, and a controller to configure another arrangement of the indicia responsive to one of the user actuations on the user control, the other arrangement being aligned in conformance with the predetermined contour.

The foregoing and/or other aspects and utilities of the present general inventive concept are also achieved by providing a method of forming user commands on a user interface to an electronic device including providing a user control having a predetermined contour and actuated through a plurality of distinct user actuations, displaying indicia indicative of user data items on a display in an arrangement conforming to the predetermined contour of the user control, detecting an input expression formed from at least one of the user actuations and at least one location on the user control at which the at least one of the actuations occurs, determining whether the user command is associated with the input expression, and, upon a poitive determination thereof, executing the user command corresponding to the user data item corresponding to the indicia at the location in the arrangement corresponding to the location on the user control at which the actuation occurs, and displaying the indicia in another arrangement conforming to the predetermined contour of the user control responsive to the input expression.

The foregoing and/or other aspects and utilities of the present general inventive concept are also achieved by providing a user interface to an electronic device including a physical user interface of at least one control having a predetermined contour, the control being actuated to form user commands from a plurality of distinct user actuations, and a graphical user interface to display indicia indicative of user data items stored in the electronic device, the user data items being arranged in the graphical user interface in conformance with the predetermined contour of the control and manipulated responsive to the user commands.

The foregoing and/or other aspects and utilities of the present general inventive concept are also achieved by providing an electronic device including a user control having a predetermined contour and actuated through a plurality of distinct user actuations, a display having displayed thereon indicia indicative of user data items in an arrangement conforming to the predetermined contour of the user control, a control unit to detect an input expression formed from at least one of the user actuations and at least one location on the user control at which the at least one of the actuations occurs, to determine whether the user command is associated with the input expression and the user data item corresponding to the indicia at the location in the arrangement corresponding to the location on the user control at which the actuation occurs, to generate the indicia in another arrangement conforming to the predetermined contour of the user control responsive to the input expression, and to provide the other arrangement to the display.

The foregoing and/or other aspects and utilities of the present general inventive concept are also achieved by providing an entertainment device including a plurality of user modes respectively associated with a plurality of audio or visual presentation functions of the entertainment device, and a user interface including a user control having a predetermined contour and actuated by a plurality of distinct user actuations thereon, a display having indicia displayed thereon aligned in an arrangement conforming with the predetermined contour, the indicia forming indications of data items respectively associated with the audio or visual presentation functions of the entertainment device, and a controller to configure another arrangement of the indicia responsive to one of the user actuations on the user control, the other arrangement being aligned in conformance with the predetermined contour, the controller further performing user commands to execute one of the audio or visual presentation functions associated with the user actuations and the data item corresponding to the indicia at a location in the arrangement corresponding to a location on the user control at which the actuation occurs.

The foregoing and/or other aspects and utilities of the present general inventive concept are also achieved by providing a user interface system to an electronic device including a user control having a predetermined contour and actuated by a plurality of distinct user manipulations, a display displaying indicia aligned in conformance with the predetermined contour of the user control, and a controller to manipulate the indicia in response to one of the user manipulations on the user control.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIGS. 1A and 1B are views illustrating an electronic device capable of inputting a user command according to an exemplary embodiment of the present general inventive concept;

FIG. 2 is a block diagram illustrating the internal construction of an electronic device capable of inputting a user command according to an exemplary embodiment of the present general inventive concept;

FIG. 3 is a view illustrating the arrangement of touch sensors constituting a touch sensor unit;

FIG. 4 is a flowchart illustrating a method of displaying a GUI in accordance with an input user command according to an exemplary embodiment of the present general inventive concept;

FIG. 5 is a flowchart illustrating a method of displaying a GUI that corresponds to a user command input in a first touch region after a power-on command is input according to an exemplary embodiment of the present general inventive concept;

FIGS. 6A to 6C and 7A to 7B are views related to displaying a GUI in accordance with a user command that is performed in a first touch region according to exemplary embodiments of the present general inventive concept;

FIG. 8 is a flowchart illustrating a method of displaying a GUI that corresponds to a user command input in a second touch region according to an exemplary embodiment of the present general inventive concept;

FIGS. 9A to 9C are views related to displaying a GUI in accordance with a user command that is performed in a second touch region;

FIGS. 10A to 10C are views related to displaying a GUI in accordance with a user command that is performed in a third touch region;

FIGS. 11A to 11H, 12, 13, and 14 are views related to searching a list in accordance with a user command that is performed in the touch region according to an exemplary embodiment of the present general inventive concept;

FIGS. 15A to 15C are views related to a method of reproducing music recorded from a specified album according to an exemplary embodiment of the present general inventive concept; and

FIGS. 16A to 16E are views related to a user command in a radio mode of the electronic device according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

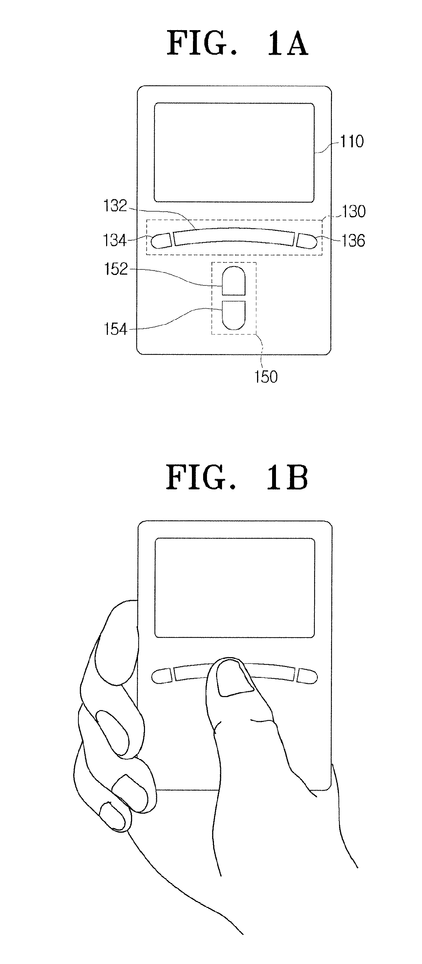

FIGS. 1A and 1B are views illustrating an electronic device capable of inputting a user command according to an embodiment of the present general inventive concept. The exemplary electronic device illustrated and described below implements a digital media player, however application of the present general inventive concept to other devices will be readily apparent to the skilled artisan upon review of this disclosure. The present general inventive concept is intended to embrace all such other applications.

FIG. 1A is a front view of the exemplary electronic device. As illustrated in FIG. 1A, an LCD 110, a touchpad 130, and a manipulation button 150 are provided on an outer surface of a housing 160 of the electronic device. In certain embodiments of the present general inventive concept, the LCD 110, the touchpad 130 and the manipulation button 150 are disposed on a front face 162 of the housing 160.

The LCD 110 implements a display that displays a graphic user interface (GUI) including contents such as images, text, icons, figures, and so forth. GUI items, e.g., text, icons, and so forth, may be displayed on the LCD 110 in an arrangement conforming to the contour of the touchpad 130, as will be clear from the descriptions that follow.

The touchpad 130 realizes a physical user interface (PUI) control through which a user can input a user command to the GUI displayed on the LCD 110. Through the touchpad 130, a user can input numerous user commands including a list display command, a command to select a specified item, a volume adjustment command, and others.

The touchpad 130 receives an input of other user commands according to the user's manipulation of the touchpad and according to the physical space of the touchpad 130 as well. The touchpad 130 may accept input through manipulations that include a "touch", a "slide", and a "press". By way of the manipulations, and by a location on the touchpad where the manipulation occurs, numerous input expressions may be formed to specify a desired user command, as will be detailed below.

The "touch" actuation is to input the user command through the user's touch of the touchpad 130 using, for example, a finger, and the "slide" actuation is to input the user command through the movement of, for example, a finger while touching the touchpad 130. The "press" actuation is to input the user command through the user's press on the touchpad 130. The touch may be achieved by applying less actuation pressure to the touchpad than is applied for the press, as will be described further below.

The press may be divided into a "short press" and a "long press" in accordance with the duration over which the user presses the touchpad 130. In certain embodiments of the present general inventive concept, the user command input by a user's press on the touchpad 130 for less than one second is defined as a short-press user command, and the user command input by a user's press on the touchpad 130 for more than one second is defined as a long-press user command. The actuation duration defining each of the short-press and the long-press can be changed by a device setting. Also, in certain embodiments of the present general inventive concept, in the case where the press and the slide are simultaneously actuated, the input is considered to be that of the slide.

The touchpad 130 may be divided into a first touch region 132, a second touch region 134, and a third touch region 136. A user may perform the slide after he/she touches a specified point in the first touch region 132, responsive to which a highlight being displayed on the LCD 110 is changed. The phrase "change of the highlight" and similar phrases refers herein to the change of a highlighted item to one of a plurality of items being displayed on the LCD 110 by an action in the display that corresponds to the user actuation. The highlighted item may be distinguished through a size that is larger than other items. In displaying the highlighted item on the LCD, a perspective representation may be used. That is, the highlighted item being displayed on the LCD may have a large size, and other items may be displayed around the highlighted item gradually smaller in size with increasing distance from the highlighted item. Alternatively, the highlighted item being displayed on the LCD may have a color different from that of other items to discriminate the highlighted item from other items.

If a short press is performed in the first touch region 132, the highlighted item may be selected, and details of the selected item and/or contents related to the selected item may be displayed.

In addition, if the user performs the touch on the first touch region 132 while the electronic device reproduces music or a moving image, a volume bar may be displayed, and the user can adjust the level of an audio signal being reproduced by adjusting the volume bar through a user actuation.

The second touch region 134 and the third touch region 136 may each be actuated through the touch, the slide, and the press. If the user performs the slide from the first touch region 132 to the second touch region 134 or the third touch region 136, the highlight that is displayed on the LCD 110 may be changed in the same manner as when the slide is performed in the first touch region 132 alone. When the user continues the touching actuation in the second touch region 134 or the third touch region 136 for a predetermined duration, the highlight being displayed on the LCD 110 is changed, and if the user performs the press in the second touch region 134 or the third touch region 134, the speed at which the highlighted item changes increases. In addition, in the case where a still image is displayed on the LCD 110, the user can cause the display of the previous still image or the next still image by performing the short-press in the second touch region 134 or the third touch region 136.

In FIG. 1A, the touch regions 132, 134, and 136 are separated for purposes of explanation and not limitation. The present general inventive concept may also implement a single touchpad 130 incorporating all of the touch regions.

The manipulation button 150 is a physical user interface (PSU) control to input a user command through a user's press on the manipulation button, and may include a first manipulation button 152 and a second manipulation button 154. If the user performs the short press on the first manipulation button 152, it may function as a back button. For example, if the user performs the short press on the first manipulation button 152 while a list is displayed on the LCD 110, a list higher in a hierarchy of lists than the displayed list may be displayed. If the user performs the long press on the first manipulation button 152, it may function as a main menu button. For example, if the user performs the long press on the first manipulation button 152, a mode list that is the uppermost list in the hierarchy of lists is displayed on the LCD 10 regardless of the list or contents currently displayed on the LCD 110.

The second manipulation button 154 may function as a play/stop button or a power on/off button in accordance with its press duration. If the user performs the short press on the second manipulation button 154 while a moving image or a music item is displayed on the LCD 110, the moving image or music may be reproduced. However, if the user performs the short press on the second manipulation button 154 while the moving image or music is being played, the reproduction of the moving image or music may be stopped. In addition, if the user performs the long press on the second manipulation button 154, the power supply to the electronic device may be turned on or off. Numerous diverse and distinct user commands can be performed through the touchpad 130 and the manipulation button 150, and certain exemplary user commands are described in the paragraphs that follow.

As described above, since the user can input commands for all operations of the complicated electronic device using only, for example, one touchpad 130 and two manipulation buttons 150, he/she can use the electronic device more conveniently. Also, since the structure of the manipulation unit is simple, the user can input the user command while holding the electronic device in his/her hand.

FIG. 1B is a view illustrating a method of inputting a user command with the electronic device in a user's hand.

The user may grasp the electronic device with his/her fingers except the thumb, and may input a user command through the manipulation of the electronic device by using only his/her thumb. Also, the user command to operate the electronic device may be made by contacting his/her thumb with the touchpad 130, and then sliding his/her thumb left or right, or pressing the touchpad 130 or pressing the manipulation button 150. Accordingly, the user can use the electronic device more safely and conveniently while in motion or in a small space, without paying any special attention thereto.

In certain embodiments of the present general inventive concept, the contour of the touchpad 130 conforms to the arc formed by a user's thumb when translated left and right while the electronic device is held steady in the grasp of the user's hand. The same contour may also define the arrangement of items of the GUI being displayed on the LCD 110.

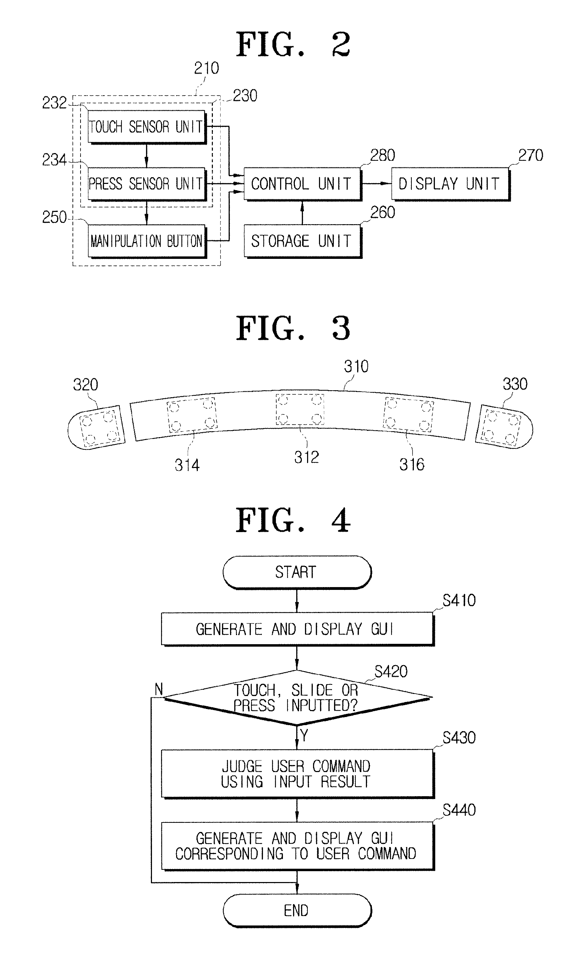

Hereinafter, the internal structure of the exemplary electronic device as described above will be described in detail with reference to FIG. 2.

FIG. 2 is a block diagram illustrating the internal construction of an electronic device capable of inputting a user command according to an embodiment of the present general inventive concept.

As illustrated in FIG. 2, the electronic device according to the present general inventive concept comprises a manipulation unit 210, a storage unit 260, a display unit 270, and a control unit 280. The manipulation unit 210 includes a touchpad 230 and a manipulation button 250, and the touchpad 230 includes a touch sensor unit 232 and a press sensor unit 234. It is to be understood that although the functional compartmentalization of FIG. 2 facilitates an understanding of the present general inventive concept through descriptions of the components of the illustrated exemplary embodiment, such configuration is not essential to practice the present general inventive concept. Elements other than those shown and described may be substituted therefor, functionality portrayed as carried out in multiple elements may be combined into a single component, and elements described as discrete may be distributed across multiple components. Indeed, numerous variations, alternatives and modifications will become apparent to the skilled artisan upon review of this disclosure and the present general inventive concept is intended to encompass such alternative configurations.

Additionally, the schematic diagram of FIG. 2 depicts only those exemplary components central to the description of the present general inventive concept, as embodied by the exemplary circuit, and certain auxiliary components of the embodied present general inventive concept that may underlie the full implementation thereof, but are trivial to the fundamental concepts thereof, will be omitted in the interest of brevity of the description and the intelligibility of the drawing

The display unit 270, the touchpad 230, and the manipulation button 250 as illustrated in FIG. 2 may be implemented by the LCD 110, the touchpad 130, and the manipulation button 150, respectively, as illustrated in FIG. 1.

The exemplary touch sensor unit 232 provided in the touchpad 230 senses the user's slide and touch, and provides a signal indicative thereof to the control unit 280, as will be explained below. The touch sensor unit 232 may comprise a plurality of touch sensors that are activated into an "on" state by applying an actuation pressure thereon, such as through the user's touch. Positions where the respective touch sensors are provided may respectively define different touch points, or several touch sensors may be grouped into one touch point, as will be described below with reference to FIG. 3.

The exemplary press sensor unit 234 senses the user's press, and provides a signal indicative thereof to the control unit 280. The press sensor unit 234 comprises a plurality of press sensors, each of which are activated into an "on" state by applying an actuation pressure, such as through a user's press. In certain embodiments of the present general inventive concept, the actuation pressure to activate a press sensor is greater than the actuation pressure to activate a touch sensor. The press sensor unit 234 provided in the touchpad 230 may be positioned under the touch sensor unit 232 so that either a touch actuation or a press actuation may be achieved at collocated regions of the touchpad 230. If the press is sensed, the press sensor may provide a signal to the control unit 280 over the duration that the press sensor is activated.

In certain embodiments of the present general inventive concept, the manipulation button 250 comprises one press sensor, and in the same manner as the press sensor unit 234 of the touchpad 230, it senses and transfers the user's press and the press duration to the control unit 280.

The exemplary storage unit 260 stores data required to operate the electronic device. In particular, the storage unit 260 stores therein data to form indicia on the display unit 270 of the electronic device, such as data related to a menu list, data related to items that constitute the menu list, icons corresponding to the items, data related to text, and so forth. The storage unit 260 may also store processor instructions that, when executed by a processor, perform operations of the electronic device, such as those described below. The storage unit 260 may be implemented by a suitable memory device, such as a ROM, a RAM, a hard disk, and so forth. As needed, the data stored in the storage unit 260 may be deleted, and new data may be stored in the storage unit 260.

The exemplary control unit 280 controls the functions of the electronic device. In particular, the control unit 280 may determine a user command from the input expressions formed on the touch sensor unit 232, the press sensor unit 234, and the manipulation button 250, and may generate responsive thereto the GUI that corresponds to the user command. The control unit 280 may also control the display unit 270 to display the generated GUI.

The control unit 280 may control other elements provided in the electronic device to respond to the user command in other than an action in the GUI.

The exemplary system illustrated in FIG. 2 may be implemented in hardware, software, or a combination of both. For example, certain components, such as the control unit 280, may be suited to be realized as processor instructions executing in one or more computer execution threads on one or more processors. The controller 280 may be implemented on a dedicated processor, or may be executed on a processor implementing other functionality of the electronic device. Alternatively, the controller may be realized in one or more application specific circuits. The present general inventive concept may be embodied through numerous configurations other than that illustrated in FIG. 2 without deviating from the spirit and intended scope thereof.

FIG. 3 is a view illustrating the arrangement of touch sensors constituting an exemplary touch sensor unit 232.

As illustrated in FIG. 3, the exemplary arrangement of touch sensors, a representative one of which is illustrated at 350, that constitute the touch sensor unit 232 conforms to the contour of the touchpad 230. Points where the touch sensors 350 are respectively positioned in the touchpad 230 may define respective touch points. The respective touch points may be implemented in separate touch sensors 350 each acting as different touch points, or several touch sensors 350 may be established in a cluster to define a single touch point. In the exemplary embodiment illustrated in FIG. 3, four touch sensors 350 are clustered to define one touch point. In a first touch region 310, a first touch point 312, a second touch point 314, and a third touch point 316 are provided, and in each of a second touch region 320 and a third touch region 330, one touch point is provided. The number and location of touch points in the first touch region 310 may differ according to the number of items that constitute the item list to be displayed, and in the embodiment of the present general inventive concept, it is exemplified that three touch points are provided for the sake of explanation and not limitation.

In the case where the user's thumb touches one touch point only, the control unit 280 can determine which touch point is activated by a signal applied from the touch sensor unit 232. However, as the user performs the slide, the user's thumb may touch two neighboring touch points simultaneously. In this case, the control unit 280 identifies an active touch point as the number of touch sensors activated at each touch point changes with the slide. In certain embodiments of the present general inventive concept, the touch point having a greater number of activated touch sensors is designated as the active touch point. If the number of touch sensors activated in each of the two touch points is equal, the control unit 280 determines that no touch point is currently the active touch point.

Hereinafter, a process of displaying the GUI in accordance with the user command input to the electronic device as illustrated in FIG. 2 will be described in detail with reference to FIG. 4. FIG. 4 is a flowchart illustrating a method of displaying a GUI responsive to an input user command according to an embodiment of the present general inventive concept.

First, the control unit 280 generates the GUI from data items stored in the storage unit 260, and provides the generated GUI to the display unit 270. The display unit 270 displays the GUI in operation S410.

In operation S420, the control unit 280 determines whether the touch, the slide, or the press is input on the basis of the signal received from the touch sensor unit 232, the press sensor unit 234, or the manipulation button 250.

If it is determined that the touch, the slide, or the press is input ("Y" in operation S420), the control unit 280 forms the user command in operation S430 from the input expression.

Then, in operation S440, the control unit 280 generates the GUI that corresponds to the user command, and controls the display unit 270 to display the GUI. In instances where the input expression is not associated with a user command, such as when navigating menus to locate a particular item, the GUI may also be configured accordingly. In certain embodiments of the present general inventive concept, certain input expressions are associated with user commands that perform a device function, such as when playing a media file or adjusting volume, and other input expressions do not perform such user commands, but are used to navigate the GUI. Also, it is to be understood that an input expression may be formed over multiple controls of the device to both execute a user command, and to perform other functions, such as navigation.

Thereafter, the operation S420 and the subsequent operations are repeated.

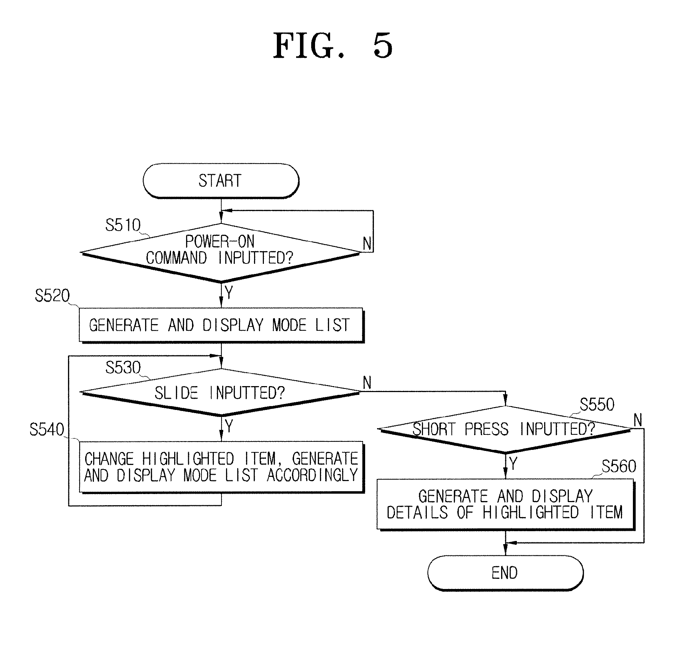

A process of generating and displaying the GUI of a mode list, which, in certain embodiments of the present general inventive concept, is the uppermost list in a hierarchy of lists, responsive to a command for turning on the device power is will now be described in detail. FIG. 5 is a flowchart illustrating a method of displaying a GUI that corresponds to a user command input in a first touch region 310 after a power-on command is input according to an exemplary embodiment of the present general inventive concept.

The control unit 280 first determines whether the power-on command is input in operation S510.

The user may input the power-on command by pressing and holding the second manipulation button of the manipulation buttons 250 for a predetermined period of time. To turn on the power of the exemplary electronic device, the user may press the second manipulation button for more than one second. Accordingly, the control unit 280 determines that the user command for turning on the power has been input, and operates to turn on the power of the electronic device.

If it is determined that the power-on command is input ("Y" in operation S510), the control unit 280 reads data stored in the storage unit 260 of the electronic device, and generates in operation S520 a mode list of data items indicative of the operational modes of the electronic device. In generating the mode list, the control unit 280 highlights a mode item at the center of the mode list, and arranges the data items of the mode list to conform to the contour of the touchpad 230. Then, the control unit 280 controls the display unit 270 to display the generated mode list. If the number of mode items constituting the mode list is larger than the number of items that can be displayed on the display unit 270, the mode list may be generated using a subset of the mode items. The control unit 280 may then highlight the mode item arranged at the center of the mode items to be displayed on the display unit 270, arranges the data items of the mode list to conform to the contour of the touchpad 230, and controls the display unit 270 to display the mode list.

Meanwhile, the control unit 280 determines whether a slide actuation is input in operation S530. The user may touch the first touch region 310 with his/her thumb, and may perform the slide by successively activating the touch points while maintaining the touch state with the touchpad 230. The control unit 280 determines that the slide has occurred by receiving signals from successive touch points, and can also determine in which direction the slide has been performed by using the moving direction of the touch point.

The control unit 280 generates a new mode list, such as by changing the highlighted item, in accordance with the sensing from the touch sensor unit 232, and controls the display unit 270 to display the generated mode list. When the highlighted item is changed, even if the items constituting the mode list are different from the items of the mode list previously generated and displayed, the control unit 280 assumes that they are different mode lists.

The control unit 280 determines whether a short-press command is input in operation S550. The press sensor unit 234 may determine whether the press actuation has occurred. The user may touch the first touch region 310 with his/her thumb, and may apply pressure to the first touch region 310 for a short time (such as, less than one second) so that the press sensor unit 234 can sense the press. Accordingly, the press sensor in the first touch region 310 applies a signal indicative of the press actuation to the control unit 280 over the press duration, and the control unit 280 then determines that the short-press command has been input.

If it is determined that the short-press command is input ("Y" in operation S550), the control unit 280 generates items pertaining to details of the highlighted item being displayed on the display unit 270 and controls the display unit 270 to display the generated details of the highlighted item in operation S560. Specifically, the control unit 280 reads data of the details of the highlighted items stored in the storage unit 260, processes and provides the read data to the display unit 270 so that the data can be displayed on the display unit 270. The details of the highlighted item may be a list of details of the highlighted item or other detailed information related to the highlighted item. In certain embodiments of the present general inventive concept, the list of details of the highlighted item, which is generated by the control unit 280, conforms to the contour of the touchpad 230.

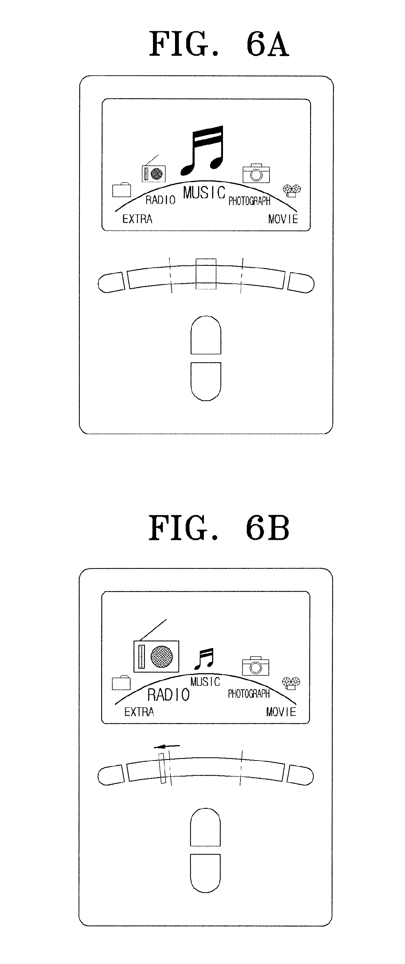

FIGS. 6A to 6C are views related to a method of displaying a GUI in accordance with a user command that is performed in a first touch region 310 according to an embodiment of the present general inventive concept.

If the power-on command is input as in operation S510, the control unit 280 reads the mode list that is the uppermost list in the hierarchy of lists stored in the storage unit 260, generates a new mode in which the specified item is highlighted, and provides the generated new mode list to the display unit 270.

The items constituting the mode list related to the exemplary electronic device may be "Voice Recording", "Extra", "Radio", "Music", "Photograph", "Movie", "Setting", and so forth. All or a part of the mode items may be displayed on the display unit 270 at any one time. For example, when five mode items may be displayed on the display unit 270, the control unit 280 generates the mode list by using the items corresponding to, for example, "Extra", "Radio", "Music", "Photograph", and "Movie", but not the items "Voice Recording" and "Setting". In the embodiment of the present general inventive concept, the mode list is generated by using text and icons that correspond to all of the mode items.

The control unit 280 may initially highlight the icon and text related to a default mode item, such as the item "Music," to be located in the center among all the items to be displayed on the display unit 270, and then generates the mode list so that the arrangement of the displayed items of the mode list conforms to the contour of the touchpad 230. Then, the control unit 280 controls the display unit 270 to display the generated mode list as illustrated in FIG. 6A.

If the user performs the slide in a left direction after he/she touches the touchpad 230 with his/her thumb, the highlight being displayed on the display unit 270 may be shifted to a left item. Specifically, if the user touches the first touch point 312 in the first touch region 310 and performs the slide for moving his/her thumb to the second touch point 314 while keeping the touch state, the touch sensor located at the first touch point 312 senses the touch, and then the touch sensor located at the second touch point 314 senses the touch. The respective touch sensors provide the results of sensing to the control unit 280. In this case, since the control unit 280 receives a signal indicating that the touch sensor at the first touch point 312 and then the touch sensor at the second touch point 314 have been activated, it determines that the slide has been performed from the first touch point 312 to the second touch point 314, i.e., in the left direction.

Accordingly, the control unit 280 generates a mode list in which the highlight is shifted to the left side, and provides the generated mode list to the display unit 270. That is, the control unit 280 reads the mode list that includes the items "Extra", "Movie", and so forth, from the storage unit 260, highlights the item "Radio" originally arranged on the left side of the item "Music", and generates a new mode list that includes the highlighted item "Radio" and conforms to the contour of the touchpad 230. Then, the control unit 280 provides the generated mode list to the display unit 270, and the display unit 270 displays the mode list as illustrated in FIG. 6B.

As illustrated in FIG. 6B, the form of the menu list, i.e., the form of the arrangement of the items constituting the menu list, conforms to the contour of the touchpad 230. In addition, it can be recognized that the moving direction of the user's thumb on the touchpad 230 is the same as the moving direction of the highlight. Although FIG. 6B shows that the highlight has been shifted from the item "Music" to the item "Radio", the control unit 280, in order to generate the menu list as illustrated in FIG. 6B, reads the mode list including the items "Extra", "Music", and so forth, stored in the storage unit 260, highlights the item "Radio", and generates the mode list in the same manner as that of generating the mode list illustrated in FIG. 6A to provide the generated mode list to the display unit 270.

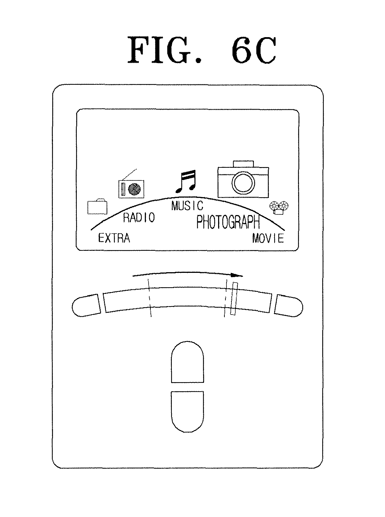

On the other hand, if the user slides his/her thumb from the second touch point 314 to the third touch point 316 through the first touch point 312, the touch sensors of the touch sensor unit 232 provides a signal to the control unit 280 while the touch is performed indicating that the slide has been performed from the second touch point 314 to the third touch point 316 through the first touch point 312. As the slide is performed from the second touch point 314 to the first touch point 312, the control unit 280 generates the mode list as illustrated in FIG. 6A, and provides the generated mode list to the display unit 270. As the slide continues from the first touch point 312 to the third touch point 316, the control unit generates the mode list as illustrated in FIG. 6C and provides the generated mode list to the display unit 270.

That is, if it is determined that the slide has been performed from the first touch point 312 to the third touch point 316, the control unit 280 reads the mode list composed of the items "Extra", "Movie", and so forth, stored in the storage unit 260, and highlights the icon and text of the item "Photograph" to be arranged on the right side of the item "Music". Then, the control unit 280 generates the mode list to conform to the contour of the touch pad 230, and then controls the display unit 270 to display the generated mode list. Accordingly, the mode list is displayed in a manner that the highlight is shifted in a direction that corresponds to the direction in which the user's thumb slides on the touchpad 230. It will appear to the user that the highlight has shifted, but in the strict sense, the highlighted item has changed.

Referring to FIGS. 6A to 6C, it is exemplified that the user's thumb slides to the second touch point 314 after touching the first touch point 312, or slides from the second touch point 314 to the third touch point 316 through the first touch point 312. However, the present general inventive concept is not limited thereto. That is, it is not necessary for the user's thumb to first touch the first touch point 312, but, rather, the highlight is shifted responsive to the direction of the slide after the touch is performed, regardless of where the first touch on the touchpad 230 is made. Accordingly, if the highlight is on the specified item, the user can touch any one of the first touch point 312, the second touch point 314, and the third touch point 316. In this state, if the user performs the slide from the touched point to the right touch point, the highlight displayed on the display unit 270 is shifted to the right side, while if the user performs the slide from the touched point to the left touch point, the highlight is shifted to the left side.

Further, even if the user performs the slide to the third touch point 316 after touching the third touch region 330 displayed on the display unit 270 as illustrated in FIG. 6A with his/her thumb, the GUI as illustrated in FIG. 6B is displayed on the display screen of the electronic device.

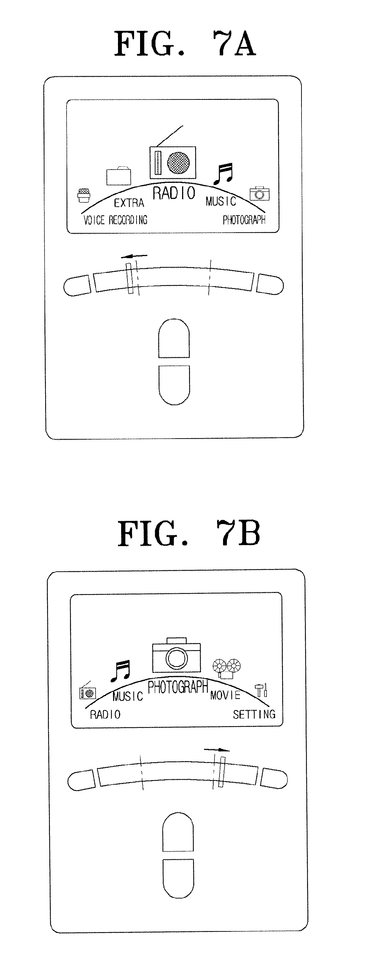

FIGS. 7A to 7B are views related to a method of displaying a GUI in accordance with a user command according to another embodiment of the present general inventive concept.

In FIGS. 6A to 6C, it is exemplified that the highlight is shifted according to the direction in which the slide is performed in a manner where the display positions of the items constituting the mode list are not changed. However, the present general inventive concept is not limited thereto, and the items may be shifted with the highlight fixed in the center of the display unit 270.

In certain embodiments of the present general inventive concept, if the user touches the touchpad 230 with his/her thumb and performs the slide for moving by one step the touch point to the left side while maintaining the touch state with the touchpad 230, the touch sensor unit 232 provides the result of sensing to the control unit 280. In reading the mode list to be displayed on the display unit 270 among the mode lists stored in the storage unit 260, the control unit 280 changes a part of the mode items included in the mode list. That is, as illustrated in FIG. 6B, the control unit 280 reads the item "Voice Recording" instead of the item "Movie", the read mode items are then "Voice Recording", "Extra", "Radio", "Music", and "Photograph". Then, the control unit 280 generates a new mode list by highlighting the item "Radio" arranged in the center of the read items and arranging the mode list to conform to the contour of the touchpad 230. The control unit 280 then provides the generated mode list to the display unit 270, and the display unit 270 displays the received mode list as illustrated in FIG. 7A.

In the same manner, if the user touches the touchpad 230 with his/her thumb and performs the slide for moving by one step the touch point to the right side while maintaining the touch state, the mode items being displayed on the display unit 270 are shifted to the left side by one step, and the item "Photograph" having been shifted to the center is highlighted. That is, if it is determined that a slide command to slide to the left side by one step is input, the control unit 280 reads from the storage unit 260 the mode list to be shifted. Then, the control unit 280 highlights the item "Photograph" arranged in the center in the read mode list, generates the arrangement of the mode list to conform to the contour of the touch pad 230, and provides the generated mode list to the display unit 270. The display unit 270 displays the received mode list as illustrated in FIG. 7B.

As described above, it will appear to the user that if he/she touches the first touchpad 230 and performs the slide to the right side, the corresponding item is shifted to the left side with the highlighted position fixed, while if he/she performs the slide to the left side, the item is shifted to the right side. However, in the strict sense, it is the highlighted item that is changed.

Next, a method of displaying a GUI of an electronic device, which is performed in a second touch region 320, in accordance with the user command will be described.

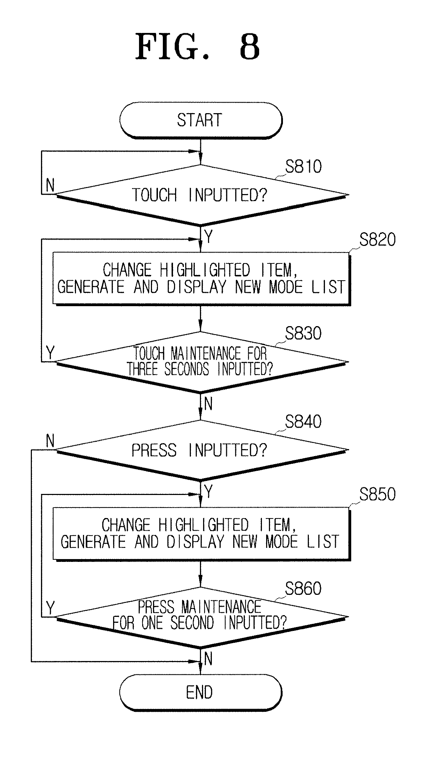

FIG. 8 is a flowchart illustrating a method of displaying a GUI that corresponds to a user command input in a second touch region 320 according to an embodiment of the present general inventive concept.

First, the control unit 280 determines whether the touch command is input in the second touch region 320 in operation S810. Specifically, the user performs the slide from the first touch region 310 to the second touch region 320. The touch sensor in the first touch region 310 senses the touch, and provides the result of sensing to the control unit 280. Thereafter, the touch sensor in the second touch region 320 senses the touch, and provides the result of sensing to the control unit 280. Accordingly, the control unit 320 determines that the touch command has been input in the second touch region 320.

If it is determined that the touch command of the second touch region 320 has been input ("Y" in operation S810), the control unit 280 changes the highlighted item, generates and provides a new mode list to the display unit 270, so that the new mode list is displayed in operation S820. The changed highlighted item is arranged on the left side of the previous highlighted item.

The control unit 280 may determine, for example, whether a touch command is maintained in the second touch region 320 for a long period, such as three seconds, in operation S830. The user can continue the touch for three seconds after moving his/her thumb to the second touch region 320. In this case, the touch sensor in the second touch region 320 provides a signal indicating that the touch is sensed for three seconds, and the control unit 280 then determines that the touch command has been maintained for three seconds.

If it is determined that the touch command is maintained for three seconds ("Y" in operation S830), the control unit 280 changes the highlighted item, generates and provides a new mode list to the display unit 270, and the new mode list is displayed in operation S840. At this time, the changed highlighted item is arranged on the left side of the previous highlighted item in the same manner as in operation S820.

Thereafter, if the user inputs again the touch command for three seconds, the control unit 280 changes the highlighted item, generates and provides a new mode list to the display unit 270. While the touch command continues as described above, the control unit 280 changes the highlighted item at intervals of three seconds, generates and provides a new mode list to the display unit 270, and the user may observe that the highlighted items are changing in succession.

On the other hand, the control unit 280 determines whether a press command is input in operation S840. When the user touches the second touch region 320 and presses the second touch region 320, the press sensor unit 234 will sense the press. The press sensor unit 234 provides a signal to the control unit 280 indicating that the press command has been input.

If it is determined that the press command is input ("Y" in operation S840), the control unit 280 changes the highlighted item, generates and provides a new mode list to the display unit 270, and the new mode list is displayed in operation S850. The changed highlighted item is arranged on the left side of the previous highlighted item in the same manner as in operation S820.

The control unit 280 determines, for example, whether a press command is maintained in the second touch region 320 for one second in operation S860. The user can continue the press of the second touch region 320 for one second, in which case, the press sensor unit 234 in the second touch region 320 provides a signal that the press is activated for one second, and thus the control unit 280 determines that the press command is maintained for one second.

If it is determined that the press command is maintained for one second ("Y" in operation S860), the control unit 280 changes the highlighted item, generates and provides a new mode list to the display unit 270, and the new mode list is displayed in operation S850. At this time, the changed highlighted item is arranged on the left side of the previous highlighted item in the same manner as that in operation S820.

Then, if the user again the maintains the press command for one second, the control unit 280 changes the highlighted item, generates and provides a new mode list to the display unit 270. While the command is maintained as described above, the control unit 280 continually changes the highlighted item at an interval of one second, generates and provides a new mode list to the display unit 270, so that the user observes the highlighted items being successively changed.

In certain embodiments of the present general inventive concept, the user may successively change the highlighted items by continuously touching or pressing the second touch region 320. However, if the user wishes to change the highlighted items more rapidly, the second touch region 320 may be pressed rather than continuously touched.

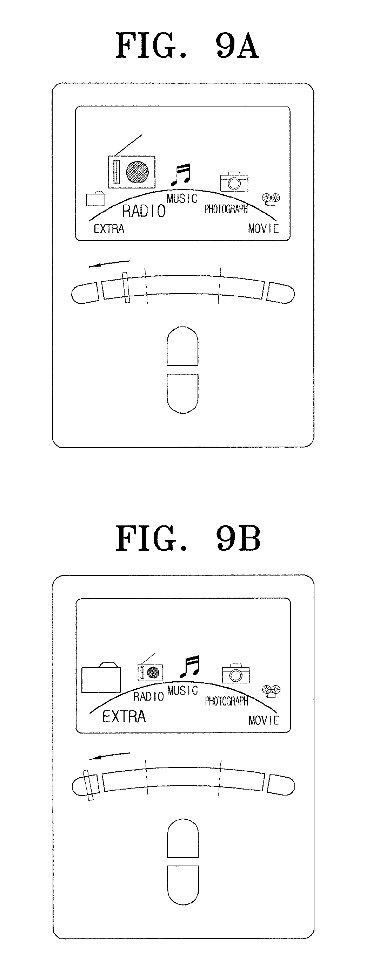

FIGS. 9A to 9C are views related to displaying a GUI in accordance with a user command that is performed in a second touch region 310.

FIG. 9A is a view depicting an exemplary mode list where the user's thumb touches the first touch region 310 before the slide from the first touch region 310 to the second touch region 320 is performed, as was depicted in FIG. 6B.

However, if the user performs the slide from the first touch region 310 to the second touch region 320 and the user's thumb touches the second touch region 320, the highlight is shifted to the item "Extra" as illustrated in FIG. 9B. In this case, since the method of generating the mode list being displayed on the display unit 270, which is performed by the control unit 280, is the same as the method of generating the mode list as illustrated in FIG. 6A, the detailed description thereof will be omitted.

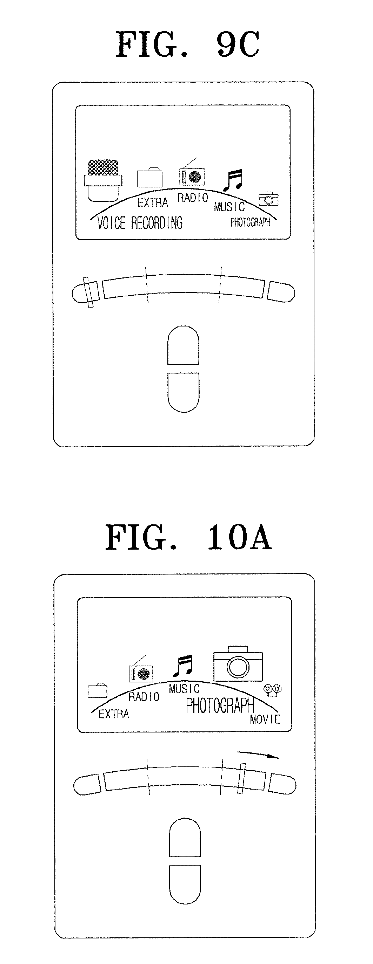

On the other hand, if the user continues to touch the second touch region 320 for three seconds, the mode list, in which the highlight is on the item "Voice Recording", is displayed on the display unit 270, as illustrated in FIG. 9C. Specifically, if it is determined that the touch command is maintained for three seconds, the control unit reads the mode list to be displayed on the display unit 270 from the storage unit 260. At this time, since the item "Extra" displayed on the display unit 270 has already been highlighted, the mode list that includes the item "Voice Recording" to be arranged on the left side of the item "Extra" is read from the storage unit. Accordingly, the control unit 280 reads the mode list that includes five items including "Voice Recording", "Photograph", and so forth, highlights the item "Voice Recording", and generates a new mode list in an arrangement that conforms to the contour of the touchpad 230. The generated mode list is displayed on the display unit 270. In FIG. 9C, the highlight is not shifted, but the highlighted item has been changed.

If the user desires to change the highlighted items more rapidly, the second touch region 320 may be pressed. In this case, the same mode list as illustrated in FIG. 9C is displayed more rapidly.

The method of displaying the GUI of the electronic device according to the user command expressed in the third touch region 330 is similar to the method of displaying the GUI of the electronic device according to the user command expressed in the second touch region 320. However, if the user continuously touches or presses the second touch region 320, the items arranged on the left side of the highlighted item are successively highlighted, while if the user continuously touches or presses the third touch region 330, the items arranged on the right side of the highlighted item are successively highlighted.

FIGS. 10A to 10C are views related to a method of displaying a GUI in accordance with a user command that is expressed in a third touch region.

FIG. 10A is a view related to the mode list in the case where the user's thumb touches the first touch region 310 before the slide from the first touch region 310 to the third touch region 330 is performed, which is the display state illustrated in FIG. 6C.

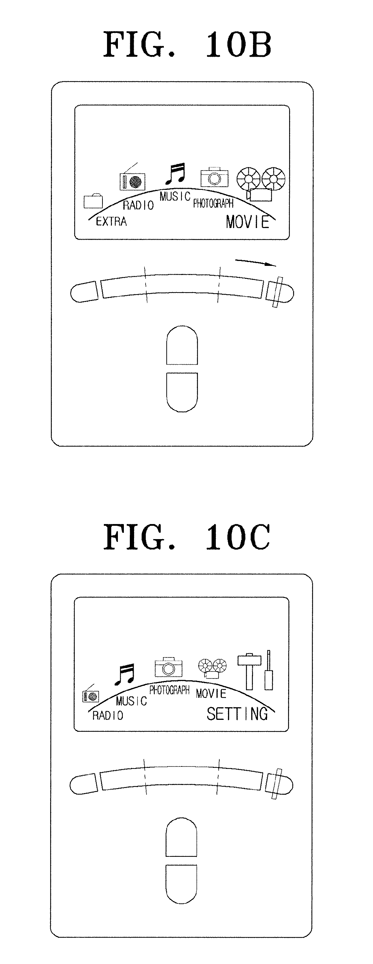

If the user performs the slide from the first touch region 310 to the third touch region 330 and the user's thumb touches the third touch region 330, the highlight is shifted to the item "Movie" as illustrated in FIG. 10B. In this case, since the method of generating the mode list being displayed on the display unit 270, which is performed by the control unit 280, is the same as the method of generating the mode list as illustrated in FIG. 6C, the detailed description thereof will be omitted.

On the other hand, if the user continues to touch the third touch region 330 for a predetermined duration, such as, for example, three seconds, the mode list, in which the highlight is on the item "Setting", is displayed on the display unit 270 as illustrated in FIG. 10C. Specifically, if it is determined that the touch command is maintained for three seconds, the control unit reads the mode list to be displayed on the display unit 270 from the storage unit 260. At this time, since the item "Movie" displayed on the display unit 270 was highlighted prior to the shift, the mode list that includes the item "Setting" and is to be arranged on the right side of the item "Movie" may be read from the storage unit 260. Accordingly, the control unit 280 reads the mode list that includes five items including "Radio", "Setting", and so forth, highlights the item "Setting", and generates a new mode list in an arrangement that conforms to the contour of the touchpad 230. The generated mode list is displayed on the display unit 270. In FIG. 10C, the highlight is not shifted, but the highlighted item has been changed.

If the user wishes to see the highlighted items changed more rapidly, the third touch region 330 may be pressed rather than touched. In this case, the same mode list as illustrated in FIG. 10C is changed from the mode list illustrated in FIG. 10B more rapidly.

The method of searching the mode list, i.e., the uppermost list in the list hierarchy, using the touchpad 230 when the power is turned on has been described. The changing direction of the highlighted items corresponds to the sliding direction in the first touch region 310, and if the user continuously touches or presses the second touch region 320 or the third touch region 330, the highlighted items are successively changed. Accordingly, the list can be searched slowly or rapidly by using the touchpad 230 only. In addition, if the touch point is changed by the slide, the highlighted item is also changed by the control unit 280. Accordingly, if the user rapidly performs the slide on the touchpad 230, the changing speed of the highlighted items would become higher. Consequently, the user's active manipulation of the touchpad 230 is reflected in display unit 270 of the electronic device, and this gives the user convenience in use.

In the exemplary embodiments of the present general inventive concept, it is exemplified that the mode items include icons and text. However, the present general inventive concept is not limited thereto. The mode items may include icons or text only. Also, the highlighted item may include the icon and text, but the non-highlighted item may include the icon or text only.

Also, in the exemplary embodiment of the present general inventive concept, it is exemplified that the touchpad 230 is in the form of an arc segment of an elliptical ring. However, the present general inventive concept is not limited thereto, and the touchpad 230 may be a smooth curve or a may be a piecewise linear curve. However, regardless of the form of the touchpad 230, in certain embodiments of the present general inventive concept, the form of the list that is displayed on the display unit 270 conforms to the contour of the touch pad 230. Accordingly, in using the electronic device, the user can navigate lists having other forms, but in a similar manner across all such forms.

In certain embodiments of the present general inventive concept, if the user performs a short press in the first touch region 310 in a state of the GUI as illustrated in FIGS. 6A to 6C, 7A to 7B, 9A to 9C, or 10A to 10C, the details of the highlighted item are displayed. If the details of the highlighted item correspond to a lower list in the hierarchy, the user may search the list in the same manner as the method of searching the mode list as described above.

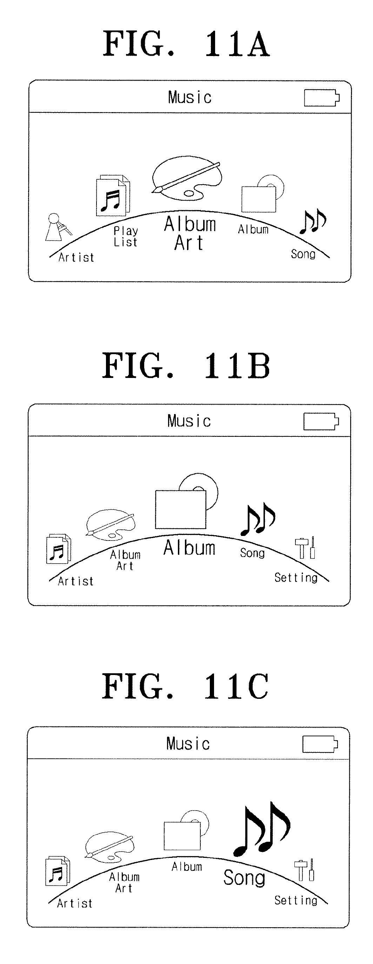

Next, a method of searching a lower list in responsive to a specified mode item being selected from the mode list will be described. The details of the specified mode item provided in the list will be described in detail with reference to FIGS. 11A to 11H.

Referring first once again to FIG. 6A, if the mode item "Music" displayed on the display unit 270 is highlighted, the user performs a short press in the first touch region 310 of the touch pad 230. The press sensor unit 234 senses the press and applies a signal indicative of the press to the control unit 280. The control unit 280, which has received the signal from the press sensor unit 234, determines that a user command for selecting a music mode has been input, and reads a list of music modes stored in the storage unit 260. If the whole list of the music modes cannot be displayed within the display space of the display unit 270, the control unit 280 reads only a part of the music mode list.

For example, it is assumed that the storage unit 260 stores a music mode list composed of icons and text that correspond to items "Line Recording", "Genre", "Artist", "Play List", "Album Art", "Album", "Song", and "Setting". Since only five items can be displayed on the exemplary display unit 270, the control unit 270 reads only a part of the music mode list. For example, the control unit 280 may read the subset of music modes which includes the items "Artist", "Play List", "Album Art", "Album", and "Song", highlights the item "Album Art", and applies the partial music mode list to the display unit 270. The display unit 270 displays the partial music mode list as illustrated in FIG. 11A.

As illustrated in FIG. 11A, on the upper end of the display unit 270, a text item "Music" that indicates the mode corresponding to the list displayed on the display unit 270 may be displayed with other information, such as system information, e.g., a capacity indicator of a battery of the electronic device. Also, the illustrated music mode list in which the item "Album Art" is highlighted is arranged to conform to the contour of the touchpad 230.

If the user touches the touchpad 230 with his/her thumb and slides his/her thumb to the right side, a music mode list as illustrated in FIGS. 11B to 11D is displayed on the display unit 270 as the touch point on the touchpad 230 is changed. Specifically, if the user touches the first touch point 312 in the first touch region 310 and slides his/her thumb to the third touch point 316 while the music mode list as illustrated in FIG. 11A is displayed on the display unit 270, the music mode list as illustrated in FIG. 11B is subsequently displayed. Then, if the user's thumb slides from the third touch point 316 to the third touch region 330, the music mode list as illustrated in FIG. 11C is displayed

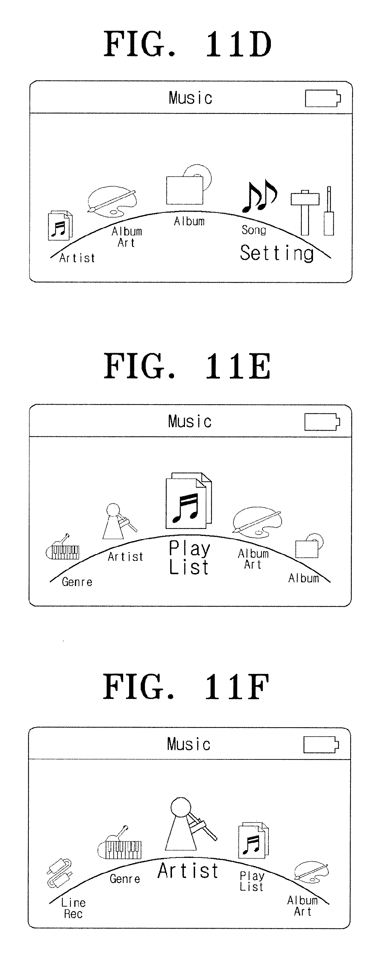

If the user maintains the touch in the third touch region 330 for a predetermined duration, e.g., for three seconds, the music mode list as illustrated in FIG. 11D is displayed. However, if the user wishes to search the music mode list more rapidly, he/she can press the third touch region 330 to display the music mode list as illustrated in FIG. 11D without waiting for the predetermine duration to expire.

By contrast, if the user touches the touchpad 230 with his/her thumb and slides his/her thumb to the left side while the music mode list as illustrated in FIG. 11A is displayed, the music mode list as illustrated in FIGS. 11E to 11H is displayed on the display unit 270 as the touch point is changed. Specifically, if the user touches the first touch point 312 in the first touch region 310 and slides his/her thumb to the second touch point 314 while the music mode list as illustrated in FIG. 11A is displayed on the display unit 270, a music mode list as illustrated in FIG. 11E is displayed. Then, if the user's thumb slides from the second touch point 314 to the second touch region 320, a music mode list as illustrated in FIG. 11F is displayed.

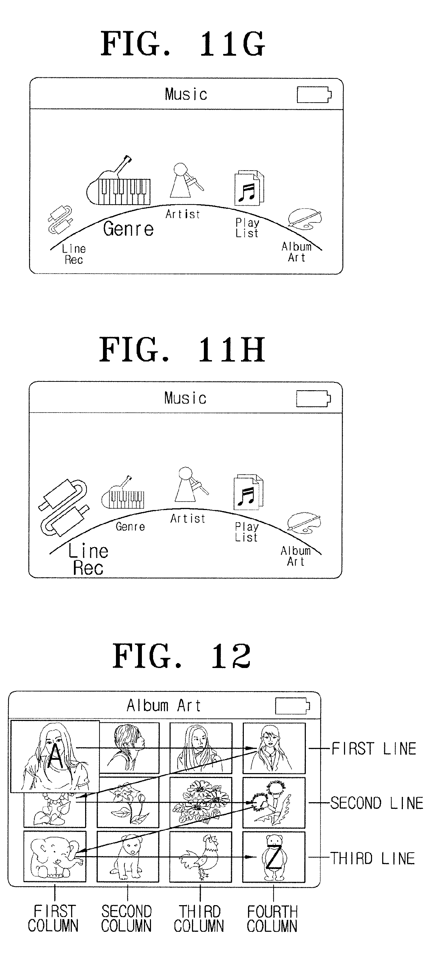

If the user maintains the touch of the second touch region 320 for a predetermined time, e.g., for three seconds, the music mode list as illustrated in FIG. 11G is displayed. If three seconds lapses, a music mode list as illustrated in FIG. 11H is displayed. However, if the user wishes to search the music mode list more rapidly, he/she can press the second touch region 320. In this case, the music mode list as illustrated in FIG. 11G is displayed, and after each second, the music mode list changes, as exemplified in FIG. 11H.

In certain embodiments of the present general inventive concept, it is not necessary for the user to perform the slide after touching the first touch point 312 in the first touch region 310 of the touch pad 230. If the user initially touches a touch point other than the first touch point 312, and performs the slide to the left side, the music mode list, in which the highlighted item is changed whenever the touch point is changed, is displayed. If the user maintains the touch of the second touch region 320 for a predetermined time, e.g., for three seconds, the music mode list, in which the items arranged on the left side of the highlighted item are successively highlighted, is displayed at intervals of three seconds. In addition, in order to rapidly move the highlight to the items arranged on the left side of the highlighted item, the user may touch the second touch region 320.

Next, a method of searching a list in which the items displayed are still images and arranged in multiple directions will be described with reference to FIG. 12.

As illustrated in FIG. 12, when a music mode list in which the item "Album Art" is highlighted on the display unit 270, the user may perform a short press in the first touch region 310. Accordingly, the details of the item "Album Art" as illustrated in FIG. 12 are displayed on the display unit 270.

It can be recognized from FIG. 12 that items that constitute the details are displayed as photographs of album jackets, and the photograph of the album jacket displayed on the left uppermost corner of the display unit 270 is highlighted. If the user touches the touchpad 230 with his/her thumb and slides his/her thumb to the right side, the highlight is shifted to the right side in the same row, and when the highlight of the album jacket in the same row is completed, the highlight may be shifted to the left edge of a lower row and then shifted again to the right side. In the manner as described above, the highlight is shifted in a direction indicated by the arrow in FIG. 12.

In the exemplary embodiment of the present general inventive concept, five touch points are provided in the touch sensor unit 232, but 12 items are included in the music mode list. To highlight each of the items constituting the array, the user may touch the first touch point 312 in the first touch region 310 and then slide his/her thumb to the right side. As the user's thumb is moved to the third touch region 330, the album jacket arranged in the third column of the first row is highlighted. If the user maintains the touch in the second touch region 320, the highlight is shifted in a direction indicated by the arrow at predetermined intervals of, for example, three seconds. In order to move the highlight faster, the user may press the third touch region 330. In this case, the highlight is shifted at an interval of, for example, one second. By contrast, in order to move the highlight in an opposite direction, the user may perform the slide from the touchpad 230 to the left side.

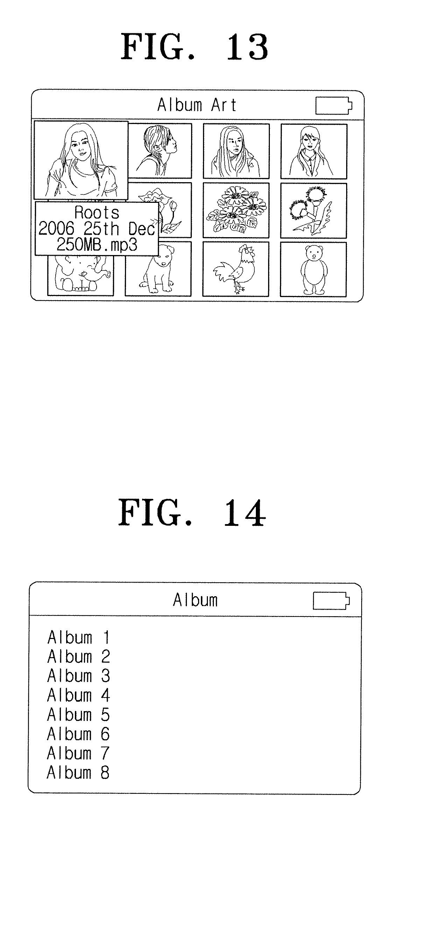

FIG. 13 is a view illustrating exemplary information related to the highlighted item. If the user wishes to confirm simple information related to the highlighted item, he/she may perform a long press in the first touch region 310. Then, the simple information related to the highlighted item, as illustrated in FIG. 13, is displayed in an information window, such as a popup window, and after three seconds has elapsed, the popup window may disappear. However, the user may remove the information window prior to the time period elapsing by performing the slide or the press.

FIG. 14 is a view related to a method of searching items in case that the items are composed of text only and the text is arranged one item above another. As illustrated in FIG. 11B, when the item "Album" is highlighted, the user may perform a short press on the first touch region 310, and thus the details of the item "Album" are displayed as illustrated in FIG. 14.

Referring to FIG. 14, on the upper part of the display unit 270, the item "Album", indicates that the list displayed on the display unit 270 relates to the item "Album." The title may be displayed together with system information, such as a capacity indicator of a battery of the electronic device, and album names may be expressed as text arranged one item above another. If the user touches the first touch region 310 and performs the slide to the right side, the highlight is shifted downward. Also, if the user maintains the touch on the third touch region 330, the highlight is shifted downward at intervals of three seconds. Then, if the user performs the slide to the left side again, the highlight is shifted upward, and if the user maintains the touch on the second touch region 320, the highlight is shifted upward at intervals of three seconds. If the user intends to move the highlight faster in the same manner as described above, the user may rapidly perform the slide or press the second touch region 320 or the third touch region 330, as described above.

With reference to FIGS. 11A to 11H, 12, 13, and 14, the method of searching the details of the music mode selected among mode lists has been described. The method of searching the details of the music mode as described above can be applied to other modes in addition to the music mode. Also, the method of searching the details of the music mode can be applied to the case where the items that constitute the list are arranged up and down, left and right, or in any direction.

Hereinafter, a method of reproducing contents related to a specified item by using the manipulation unit 210 of the electronic device responsive to the specified item being selected will be described.

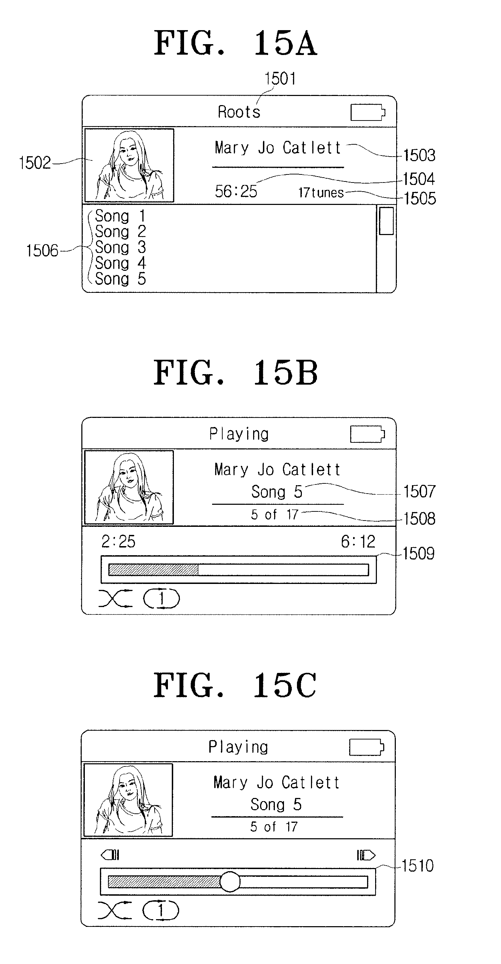

FIGS. 15A to 15C are views related to a method of reproducing music recorded in a specified album according to an embodiment of the present general inventive concept.

As illustrated in FIG. 12, when the photograph of the album jacket in the first column of the first line is highlighted, the user may perform a short press on the first touch region 310, and thus detailed information related to the item "Album" as illustrated in FIG. 15A is displayed. The detailed information related to the item "Album" may include an album name 1501, a photograph of an album jacket 1502, an artist 1503, time required to play the tunes recorded in the album 1505, and a list of tune names 1506 recorded in the album.

If the user intends to play all tunes recorded in the album, he/she may perform a short press on the second manipulation button. Then, the electronic device may play the tunes recorded in the album in order. However, if the user intends to play a specified tune, he/she performs a short press on the second manipulation button 250 when the specified tune name to be reproduced is highlighted through, for example, highlighting the tune name, and thus the selected tune is reproduced.

While the tune is playing, a scene, such as illustrated in FIG. 15B, may be displayed on the display unit 270. For example, the name 1507 of a tune being reproduced, the number of a tune 1508 being reproduced among the total number of tunes, and a progress bar 1509 indicating the reproduction time of the tune being reproduced, instead of the time 1504 required to reproduce the tunes recorded in the album, the total number of tunes 1505 recorded in the album, and the list of tunes 1506.

If the user wishes to adjust the volume of the tune being reproduced, he/she may perform a short press on the first touch region 310 during the reproduction of the tune. In this case, a volume adjustment bar 1510 may be displayed in place of the progress bar 1509, as illustrated in FIG. 15C. The user can adjust the volume by performing the slide on the first touch region 310 or the touch or press on the second touch region 320 or the third touch region 330. Once the volume is adjusted, the user may perform the short press on the first touch region 310 to return the display to its previous state.

The user can perform a fast reproduction of the tune that is being played in a forward direction or in a backward direction. In order to perform the fast reproduction of the tune in the forward direction, the user may perform a long press on the third touch region 330, while in order to perform the fast reproduction of the tune in the backward direction, the user may perform a long press on the second touch region 320.

In addition, in order to reproduce the next tune to the currently playing tune, the user may perform the short press on the third touch region 330, and in order to reproduce the previous tune to the currently playing tune, the user may perform the short press on the second touch region 320.

In addition, in order to display the main mode list, the user may perform the long press on the first manipulation button 250, and in order to display a higher list in the hierarchy, the user may perform the short press on the first manipulation button 250.

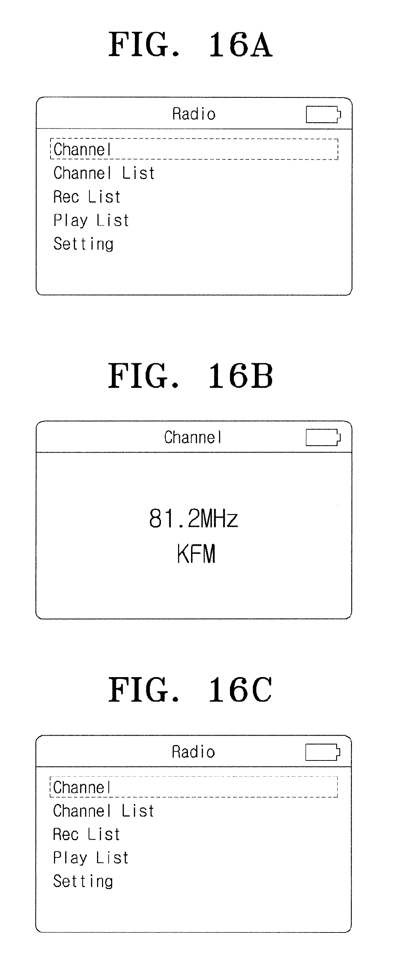

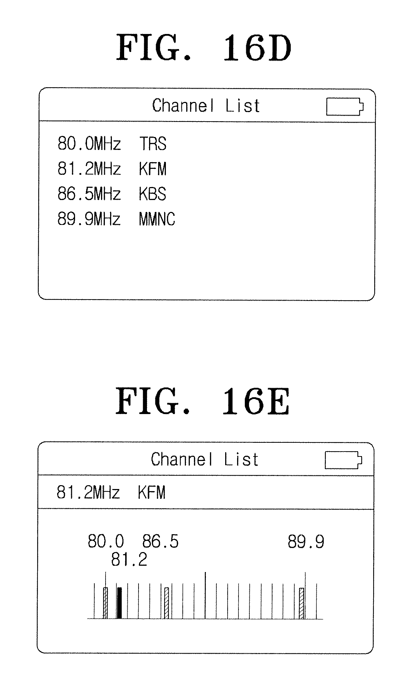

Next, a method of listening to a radio broadcast in a radio mode of the electronic device will be described with reference to FIGS. 16A and 16E.

When the item "Radio" is highlighted in the mode list, the user may perform the short press on the first touch region 310, and a menu, such as illustrated in FIG. 16A, may be displayed on the display unit 270. If the user wishes to select a specified radio signal from the radio signals that can be received in the electronic device, he/she may perform the short press on the first touch region 310 when the item "Channel" is highlighted.

The frequency of the radio signal previously selected may be displayed on the display unit 270, as illustrated in FIG. 16B, and the radio signal having the corresponding frequency is selected. The user can change the frequency of the radio signal by performing the slide or press on the touchpad 230.

In certain embodiments of the present general inventive concept, if the user wishes to separately store the frequency related to the radio broadcast which the user is listening to, he/she may perform a long press on the first touch region 310 while the receiver is tuned to the desired channel. Then, the frequency related to the currently tuned radio signal may be registered in the item "Channel List," and stored in the storage unit 260 via, for example, a suitable data structure.

Also, if the user wishes to listen to the radio signal registered in the "Channel List" in a state as illustrated in FIG. 16B, he/she may perform the short press on the first manipulation button 250. Then, a radio mode list as illustrated in FIG. 16C may be displayed on the display unit 270, and the user may perform the slide on the first touch region 310 so that the highlight is shifted to the item "Channel List".

When the item "Channel List" is highlighted, the user may perform the short press on the first touch region 310. Then, the channel items in the channel list are displayed on the display unit 270, as illustrated in FIG. 16D. The user may move the highlight to the radio frequency that the user intends to listen to by performing the slide, and when the corresponding radio frequency is highlighted, he/she may perform the short press on the first touch region 310. Then, a radio frequency table as illustrated in FIG. 16E is displayed on the display unit 270. In the radio frequency table, the frequency corresponding to the radio signal registered in the channel list may be indicated by a thick line, and the frequency corresponding to the radio signal that the user is listening to may be indicated by a line of a deep color. The frequency corresponding to the radio signal, which is registered in the channel list but which the user is not listening to, may be indicated by a line of a light color.

In the case of listening to another radio broadcast registered in the channel list, the user may also perform the slide.

As described above, diverse user commands can be input to an electronic device by using one touchpad. In certain embodiments of the present general inventive concept, the manipulation unit and the display unit are provided in a device. However, the present general inventive concept is not limited thereto. The manipulation unit and the display unit may be separately provided and may be coupled by a suitable communication channel, which may be wired or wireless. The list and the items of the electronic device as described above have been provided to explain the method for reflecting the user command on the display unit, and it is not necessary that the electronic device include the list or any of the data items described above.

As described above, according to the exemplary embodiments of the present general inventive concept, the electronic device can be easily manipulated using a touchpad and two manipulation buttons instead of several manipulation buttons that are typically provided in the electronic device. In addition, since the form of the touchpad corresponds to the form of the list, the user can locate information easily and hold the device steadily when manipulating the controls of the electronic device.

Although a few embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. An electronic device comprising:
a manipulation unit having a touch region of a specified form to receive a user command of one of at least a touch, a slide, and a press onto the touch region;
a display unit to display a graphical user interface (GUI); and
a control unit to generate a GUI that corresponds to the input user command and to control the display unit to display the generated GUI responsive to the user command being input to the manipulation unit, the control unit to generate the GUI in an arrangement of items conforming to the specified form of the touch region.

2. The electronic device of claim 1, wherein the manipulation unit comprises:
a touch sensor unit to sense the touch; and
a press sensor unit to sense the press,
wherein the press sensor unit is positioned below the touch sensor unit.

3. The electronic device of claim 1, wherein the control unit generates the GUI that includes a list of the items responsive to the user command being input to the manipulation unit.

4. The electronic device of claim 3, wherein the list is a list in which a specified item is highlighted.

5. The electronic device of claim 4, wherein the control unit controls the display of the list by changing the highlighted item if it is determined that a touch point is shifted in the touch region to input the slide input command.

6. The electronic device of claim 5, wherein a changing speed of the highlighted item is in proportion to a speed at which the touch point is shifted in the touch region.

7. The electronic device of claim 4, wherein the highlighted item is displayed on the center of the displayed list.

8. The electronic device of claim 7, wherein a direction in which the touch point is shifted in the touch region is opposite to a direction in which the items constituting the list shift in the display.

9. The electronic device of claim 4, wherein the control unit controls the display of the list by changing the highlighted item if it is determined that a specified time elapses without any movement of a specified touch point in the touch region.

10. The electronic device of claim 1, wherein the specified form is one of a piecewise linear curve and a smooth curve.

11. The electronic device of claim 1, wherein the item comprises at least one of an icon, text data, and a symbol.

12. An electronic device comprising:
a manipulation unit having a touch region to receive an input of a user command of one of at least a touch, a slide, and a press on the touch region, a contour of the touch region being one of a piecewise linear curve and a segment of an elliptical ring; and
a control unit to generate a graphical user interface (GUI) that corresponds to the input user command and to control a display of the generated GUI if the user command is input to the manipulation unit.

13. The electronic device of claim 12, wherein the manipulation unit comprises:
a touch sensor unit to sense the touch; and
a press sensor unit to sense the press,
wherein the press sensor unit is positioned below the touch sensor unit.

14. The electronic device of claim 12, wherein the control unit generates the GUI that includes a list of the items responsive to the user command being input to the manipulation unit.

15. The electronic device of claim 14, wherein the list comprises a list in which a specified item among the items is highlighted.

16. The electronic device of claim 15, wherein the control unit controls the display of the list by changing the highlighted item if it is determined that a touch point is shifted in the touch region to input the slide user command.

17. A method of controlling an electronic device, comprising:
receiving an input of a user command through a touch, a slide, and a press on a touch region of a specified form;
generating a graphical user interface (GUI) that corresponds to the input user command and in an arrangement of items to conform to the specified form of the touch region; and displaying the generated GUI.

18. A user interface system to an electronic device, comprising:
a user control having a predetermined contour and actuated by a plurality of distinct user manipulations thereon;
a display to display indicia in an arrangement aligned in conformance with the predetermined contour; and
a controller to configure another arrangement of the indicia responsive to one of the user manipulations on the user control, the other arrangement also being aligned in conformance with the predetermined contour.

19. An electronic device, comprising:
a user control having a predetermined contour and actuated through a plurality of distinct user actuations;
a display having displayed thereon indicia indicative of user data items in an arrangement conforming to the predetermined contour of the user control;
a control unit to detect an input expression formed from at least one of the user actuations and at least one location on the user control at which the at least one of the actuations occurs, to determine whether the user command is associated with the input expression and the user data item corresponding to the indicia at the location in the arrangement corresponding to the location on the user control at which the actuation occurs, to generate the indicia in another arrangement conforming to the predetermined contour of the user control responsive to the input expression, and to provide the other arrangement to the display.

20. A method of forming user commands on a user interface of an electronic device, the user interface provides a user control having a predetermined contour and actuated through a plurality of distinct user manipulations, the method comprising:
displaying indicia indicative of user data items on a display in an arrangement conforming to the predetermined contour of the user control;
detecting an input expression formed from at least one of the user manipulations and at least one location on the user control at which the at least one of the manipulations occurs;
determining whether the user command is associated with the input expression and, upon a positive determination thereof, executing the user command corresponding to the user data item corresponding to the indicia at the location in the arrangement corresponding to the location on the user control at which the one of the manipulations occurs; and
displaying the indicia in another arrangement conforming to the predetermined contour of the user control responsive to the input expression.
